# EUROPEAN PATENT APPLICATION

(11) **EP 4 708 392 A1**
(43) Date of publication of application: **11.03.2026**
(21) Application number: 24937299.6
(22) Date of filing: 22.10.2024
(51) Int. Cl.: H01M 4/36, H01M 4/04

(54) **COMPOSITE SODIUM IRON SULFATE POSITIVE ELECTRODE MATERIAL AND PREPARATION METHOD THEREFOR, POSITIVE ELECTRODE SHEET OF SODIUM-ION BATTERY, AND SODIUM-ION BATTERY**

(30) Priority: 17.07.2024 CN 202410959831
(71) Applicant: Jiangsu Pylon Battery Co., Ltd., Yangzhou City, Jiangsu 211400 (CN)
(72) Inventor: GUO, Yi, Jiangsu 211400 (CN); LI, Jianping, Jiangsu 211400 (CN); ZHANG, Weiqing, Jiangsu 211400 (CN); YANG, Qingheng, Jiangsu 211400 (CN)
(74) Representative: Loyer & Abello
(86) International application number: PCT/CN2024/126544
(87) International publication number: WO 2026/016315

(57) **Abstract**

The present invention provides a composite sodium iron sulfate positive electrode material and a preparation method thereof, a sodium-ion battery positive electrode plate, and a sodium-ion battery, relating to the technical field of batteries. In the preparation method of the composite sodium iron sulfate positive electrode material provided by the present invention, the conductivity of the conductive agent can be improved by doping boron during the preparation process of the conductive agent, reducing the amount of conductive agent; adding the conductive agent during the preparation process of the positive electrode materials can improve the dispersion uniformity of the conductive agent; and high-temperature sintering can enable the contact between the conductive agent and the active material to be more reliable, and the dry-process electrode plate prepared using the material has a lower resistance value of electrode plate.

## Description

### CROSS REFERENCE TO RELATED APPLICATION

The present invention claims priority to Chinese Patent Application No. 202410959831.5 filed with the China National Intellectual Property Administration on July 17, 2024, and entitled "COMPOSITE SODIUM IRON SULFATE POSITIVE ELECTRODE MATERIAL AND PREPARATION METHOD THEREOF, SODIUM-ION BATTERY POSITIVE ELECTRODE PLATE, AND SODIUM-ION BATTERY", which is incorporated herein by reference in entirety.

### TECHNICAL FIELD

The present invention relates to the technical field of batteries, and specifically relates to a composite sodium iron sulfate positive electrode material and a preparation method thereof, a sodium-ion battery positive electrode plate, and a sodium-ion battery.

### BACKGROUND ART

Due to the shortage of lithium resources and fluctuations in raw material prices, the development of lithium-ion batteries has been significantly affected, which has brought adverse effects on the development of the entire industry. As an effective supplement to lithium-ion batteries, sodium-ion batteries have developed rapidly in recent years.

Similar to lithium-ion batteries, based on the different positive electrode material systems, sodium-ion battery technology routes can be mainly classified into three types: layered oxide system, Prussian blue/white, and polyanions, wherein the layered oxide system has the highest energy density but relatively poor safety performance, and due to the presence of nickel in the material, the cost is relatively high; Prussian blue/white has the problem that the water of crystallization is difficult to remove, which is difficult to address in the short term; and polyanions, primarily sodium ferric pyrophosphate and sodium iron sulfate, exhibit extremely high safety and cycling performance, but relatively low bulk conductivity and gravimetric capacity.

Currently, the preparation method of positive and negative electrode plates of sodium-ion batteries still follows the same process as lithium-ion batteries, namely the wet slurry process. The wet process has good mixing uniformity of the ingredients, but it inevitably leads to the problem of binder and conductive agent floating during the coating process. In addition, the ingredient coating process involves high energy consumption, a large initial investment in equipment, and a large occupying area. Sodium-ion batteries still use this process, making it difficult to achieve an advantage in manufacturing costs. Some patents have attempted to use dry process to address the problems of the wet process.

Patent CN202310607206.X uses a metal net-shaped current collector, which can improve the contact between the active material and the substrate, but cannot address the problem of poor contact in conductive network between the active particles.

Patent CN115332486A adds a polymeric adhesive emulsion to the active material and conductive agent. There is still the existence of liquid components. It does not belong to a true dry process in the strict sense.

Patent CN116565123A uses a positive electrode active material, a carboxyl-modified conductive agent, and a conductive binder to prepare a dry-process electrode plate, improving the electrolyte wettability of the electrode plate. However, the method used is still to mix three powders simultaneously, which has the problem of dispersion uniformity.

Currently, all dry-process electrode patents add conductive agents and binders during the electrode mixing stage. All the conductive agents used, such as conductive carbon black and CNTs, are materials with large specific surface areas and prone to agglomeration. Direct dry mixing is difficult to achieve the effect of uniform dispersion of the conductive agents, thereby resulting in high impedance, poor uniformity, and unsatisfactory performance of the prepared electrode plates. In addition, current dry processes cannot introduce ceramic edges in subsequent processes, leading to potential safety risk in battery cells.

In view of this, the present invention is proposed.

### SUMMARY

The first objective of the present invention is to provide a preparation method of a composite sodium iron sulfate positive electrode material. The preparation method is simple and convenient, and the prepared composite sodium iron sulfate positive electrode material has good conductivity, and the resistance value of the electrode plate prepared by using the composite sodium iron sulfate positive electrode material as raw material is lower.

The second objective of the present invention is to provide a composite sodium iron sulfate positive electrode material.

The third objective of the present invention is to provide a sodium-ion battery positive electrode plate.

The fourth objective of the present invention is to provide a sodium-ion battery.

To achieve the above objectives, the following technical solutions are specially adopted.

In a first aspect, the present invention provides a preparation method of a composite sodium iron sulfate positive electrode material, including the following steps:
a. dispersing a conductive agent and boric acid in an aqueous solution, followed by drying treatment and calcination treatment under a protective atmosphere in sequence to prepare a boron-doped conductive agent; and
b. weighing ferrous sulfate and sodium salt according to a molar ratio of iron to sodium in sodium iron(II) sulfate Na₆Fe₄(SO₄)₇, then ball-milling and mixing the ferrous sulfate and the sodium salt with the boron-doped conductive agent prepared in step a, and then sintering the ball-milled and mixed material under a protective atmosphere to yield the composite sodium iron sulfate positive electrode material, wherein
   a mass percentage of the conductive agent in the boron-doped conductive agent is 97%-99.5%;
   in the composite sodium iron sulfate positive electrode material, a mass percentage of the boron-doped conductive agent is 1%-4%; and
   a temperature of the sintering is 300-400 °C.

As a further technical solution, the conductive agent includes a point-type conductive agent, a linear conductive agent, and a surface-type conductive agent, wherein
the point-type conductive agent includes conductive carbon black;
the linear conductive agent includes carbon nanotubes;
the surface-type conductive agent includes graphene; and
a mass ratio of the point-type conductive agent, the linear conductive agent, and the surface-type conductive agent is (0.5-0.7):(0.1-0.25):(0.05-0.2).

As a further technical solution, a temperature of the calcination is 900-1,200 °C.

As a further technical solution, the sodium salt includes sodium carbonate or sodium bicarbonate.

As a further technical solution, a particle size of the composite sodium iron sulfate positive electrode material is 1 µm-5 µm.

In a second aspect, the present invention provides a composite sodium iron sulfate positive electrode material prepared using the above-mentioned preparation method.

In a third aspect, the present invention provides a sodium-ion battery positive electrode plate, including a current collector and a film bonded to a surface of the current collector, where
the film is primarily obtained by mixing and hot-pressing the composite sodium iron sulfate positive electrode material and a binder.

As a further technical solution, the binder includes polytetrafluoroethylene (PTFE); and
a mass percentage of the binder in the film is 0.5%-2%.

As a further technical solution, the current collector includes an aluminum foil with a conductive primer on a surface and a ceramic edge as an edge.

In a fourth aspect, the present invention provides a sodium-ion battery, where a positive electrode plate of the sodium-ion battery includes the above-mentioned sodium-ion battery positive electrode plate.

Compared with the prior art, the present invention has the following beneficial effects.

In the preparation method of a composite sodium iron sulfate positive electrode material provided in the present invention, the conductivity of the conductive agent can be improved by doping boron during the preparation process of the conductive agent, reducing the amount of the conductive agent; adding the conductive agent during the preparation process of the positive electrode material can improve the dispersion uniformity of the conductive agent; and high-temperature sintering enables the contact between the conductive agent and the active material to be more reliable, and the dry-process electrode plate prepared using the material has a lower resistance value of electrode plate.

### BRIEF DESCRIPTION OF DRAWINGS

In order to more clearly illustrate technical solutions of embodiments of the present invention or the prior art, drawings that need to be used in the description of the specific embodiments or the prior art will be briefly introduced below. Obviously, the drawings described below are for some embodiments of the present invention. Those ordinarily skilled in the art could also obtain other drawings based on these drawings without using any inventive efforts.
FIG. 1 is a scanning electron microscopy image of a fibrillated powder material provided by Example 4 of the present invention; and
FIG. 2 is a scanning electron microscopy image of a surface of an electrode plate provided by Example 4 of the present invention.

### DETAILED DESCRIPTION OF EMBODIMENTS

The implementations of the present invention will be further described in detail below in combination with the embodiments and examples, but those skilled in the art would understand that the following embodiments and examples are only used for explaining the present invention and should not be regarded as limitation to the scope of the present invention. Based on the embodiments of the present invention, all other embodiments obtained by those ordinarily skilled in the art without making inventive efforts shall fall within the scope of protection of the present invention. If the specific conditions are not specified, conventional conditions or conditions recommended by the manufacturer shall be followed. Reagents or instruments used without manufacturer designation are all conventional products that can be purchased through the market.

In a first aspect, the present invention provides a preparation method of a composite sodium iron sulfate positive electrode material, including the following steps:
a. dispersing a conductive agent and boric acid in an aqueous solution, followed by drying treatment and calcination treatment under a protective atmosphere in sequence to prepare a boron-doped conductive agent; and
b. weighing ferrous sulfate and sodium salt according to a molar ratio of iron to sodium in sodium iron(II) sulfate Na₆Fe₄(SO₄)₇, then ball-milling and mixing the ferrous sulfate and the sodium salt with the boron-doped conductive agent prepared in step a, and then sintering the ball-milled and mixed material under a protective atmosphere to yield the composite sodium iron sulfate positive electrode material, wherein
   a mass percentage of the conductive agent in the boron-doped conductive agent may be, for example, but not limited to, 97%, 98%, or 99.5%;
   a mass percentage of the boron-doped conductive agent in the composite sodium iron sulfate positive electrode material may be, for example, but not limited to, 1%, 2%, 3%, or 4%; and
   a temperature of the sintering may be, for example, but not limited to, 300 °C, 320 °C, 340 °C, 360 °C, 380 °C, or 400 °C.

In the preparation method of the composite sodium iron sulfate positive electrode material provided by the present invention, the conductivity of the conductive agent can be improved by doping boron during the preparation process of the conductive agent, reducing the amount of conductive agent; adding the conductive agent during the preparation process of the positive electrode material can improve the dispersion uniformity of the conductive agent; and high-temperature sintering enables the contact between the conductive agent and the active material to be more reliable, and the dry-process electrode plate prepared using this material has a lower resistance value of electrode plate.

In some optional embodiments, the conductive agent includes a point-type conductive agent, a linear conductive agent, and a surface-type conductive agent, wherein
the point-type conductive agent includes, but is not limited to, conductive carbon black;
the linear conductive agent includes, but is not limited to, carbon nanotubes;
the surface-type conductive agent includes, but is not limited to, graphene; and
a mass ratio of the point-type conductive agent, the linear conductive agent, and the surface-type conductive agent can be, for example, but is not limited to, 0.5:0.25:0.25, 0.8:0.1:0.1, or 0.6:0.2:0.2.

The inventors have discovered by research that by constructing a composite conductive agent system, forming a point-line-surface conductive pattern is conducive to further enhancing the conductive effect of the conductive agent.

In some optional embodiments, a temperature of the calcination may be, for example, but not limited to, 900 °C, 1,000 °C, 1,100 °C, or 1,200 °C.

Lower temperatures make it difficult to achieve the doping effect. At the above-mentioned calcination temperature, the reliability of boron doping can be guaranteed.

In some optional embodiments, the sodium salt includes sodium carbonate or sodium bicarbonate.

In some optional embodiments, the composite sodium iron sulfate positive electrode material is solid particles, with a particle size of 1 µm-5 µm.

In a second aspect, the present invention provides a composite sodium iron sulfate positive electrode material prepared using the above-mentioned preparation method.

In the composite sodium iron sulfate positive electrode material, the conductive agent is uniformly dispersed, and the resistance value of the electrode plates prepared using the composite sodium iron sulfate positive electrode material as raw material is lower.

In a third aspect, the present invention provides a sodium-ion battery positive electrode plate, including a current collector and a film bonded to a surface of the current collector, where
the film is primarily obtained by hot pressing the composite sodium iron sulfate positive electrode material and a binder.

The resistance value of the electrode plate is low, which is conducive to improving the electrochemical performance of the battery.

In some optional embodiments, the binder includes polytetrafluoroethylene, and
a mass percentage of the binder in the film can be, for example, but not limited to, 0.5%, 1%, 1.5%, or 2%. Excessive binder will result in large resistance value of the electrode plate, while insufficient binder will result in low peel strength, both of which lead to poor performance.

In some optional embodiments, the current collector includes an aluminum foil with a conductive primer (e.g., a carbon coating) on a surface and a ceramic edge (alumina or boehmite) as an edge.

An undercoat can enhance the bonding strength between the film and the foil, reduce the use of the binder, and improve interfacial adhesion. The ceramic edge can improve the safety of the battery cell.

In a fourth aspect, the present invention provides a sodium-ion battery, where a positive electrode plate of the sodium-ion battery includes the above-mentioned sodium-ion battery positive electrode plate.

The battery has better electrochemical performance.

The following further illustrates the present invention through specific examples and comparative examples. However, it should be understood that these examples are merely used for more detailed illustration and should not be regarded as limitation to the present invention in any form.

It should be noted that in the following examples or comparative examples, unless otherwise specified, the chemical formula of the sodium iron(II) sulfate is Na₆Fe₄(SO₄)₇; the model of the carbon nanotube is XFNANO XFM38; the model of the graphene is XFNANO XF001H; the ceramic edge is alumina ceramic edge; and the size of the positive electrode plate is 134 mm × 214 mm.

### Example 1

A preparation method of a composite sodium iron sulfate positive electrode material, including the following steps:
1. Mixing commercial conductive carbon black (with a specific surface area of 50-80 m²/g), carbon nanotubes (CNTs), and graphene in proportion (conductive carbon black: carbon nanotubes: graphene = 0.6:0.2:0.2), then drying after mixing uniformly with boric acid in an aqueous solution, and then calcining in a hydrogen-nitrogen-argon atmosphere (calcination temperature was 1,000 °C) to yield a boron-doped composite modified conductive agent powder. The mass percentage of the conductive agent in the boron-doped conductive agent was 99.5%.
2. Weighing ferrous sulfate and sodium salt (sodium carbonate) according to the molar ratio of iron to sodium in sodium iron(II) sulfate, then ball-milling and mixing the ferrous sulfate and the sodium salt with the prepared boron-doped conductive agent, and then sintering the ball-milled and mixed material under a protective atmosphere (sintering temperature was 350 °C) to yield the composite sodium iron sulfate positive electrode material. The mass percentage of the boron-doped conductive agent in the composite sodium iron sulfate positive electrode material was 4%, and the particle size D₅₀ of the positive electrode material was 2 µm.

### Example 2

A preparation method of a composite sodium iron sulfate positive electrode material, including the following steps:
1. Mixing commercial conductive carbon black (with a specific surface area of 50-80 m²/g), carbon nanotubes (CNTs), and graphene in proportion (conductive carbon black: carbon nanotubes: graphene = 0.5:0.25:0.25), then drying after mixing uniformly with boric acid in an aqueous solution, and then calcining in a hydrogen-nitrogen-argon atmosphere (calcination temperature was 900 °C) to yield a boron-doped composite modified conductive agent powder. The mass percentage of the conductive agent in the boron-doped conductive agent was 97%.
2. Weighing ferrous sulfate and sodium salt (sodium carbonate) according to the molar ratio of iron to sodium in sodium iron(II) sulfate, then ball-milling and mixing the ferrous sulfate and the sodium salt with the prepared boron-doped conductive agent, and then sintering the ball-milled and mixed material under a protective atmosphere (sintering temperature was 300 °C) to yield the composite sodium iron sulfate positive electrode material. The mass percentage of the boron-doped conductive agent in the composite sodium iron sulfate positive electrode material was 3%, and the particle size D₅₀ of the positive electrode material was 5 µm.

### Example 3

A preparation method of a composite sodium iron sulfate positive electrode material, including the following steps:
1. Mixing commercial conductive carbon black (with a specific surface area of 50-80 m²/g), carbon nanotubes (CNTs), and graphene in proportion (conductive carbon black: carbon nanotubes: graphene = 0.7:0.1:0.2), then drying after mixing uniformly with boric acid in an aqueous solution, and then calcining in a hydrogen-nitrogen-argon atmosphere (calcination temperature was 1,200 °C) to yield a boron-doped composite modified conductive agent powder. The mass percentage of the conductive agent in the boron-doped conductive agent was 98%.
2. Weighing ferrous sulfate and sodium salt (sodium carbonate) according to the molar ratio of iron to sodium in sodium iron(II) sulfate, then ball-milling and mixing the ferrous sulfate and the sodium salt with the prepared boron-doped conductive agent, and then sintering the ball-milled and mixed material under a protective atmosphere (sintering temperature was 400 °C) to yield the composite sodium iron sulfate positive electrode material. The mass percentage of the boron-doped conductive agent in the composite sodium iron sulfate positive electrode material was 1%, and the particle size D₅₀ of the positive electrode material was 1 µm.

### Comparative Example 1

A preparation method of a composite sodium iron sulfate positive electrode material, which differs from Example 1 in that the calcination temperature was set at 400 °C.

### Comparative Example 2

A preparation method of a composite sodium iron sulfate positive electrode material, which differs from Example 1 in that the conductive agent was entirely conductive carbon black.

### Comparative Example 3

A preparation method of a composite sodium iron sulfate positive electrode material, which differs from Example 1 in that the conductive agent was entirely carbon nanotubes.

### Comparative example 4

A preparation method of a composite sodium iron sulfate positive electrode material, which differs from Example 1 in that the conductive agent was entirely graphene.

### Example 4

A positive electrode plate, including a current collector and a film bonded to the current collector, wherein the two were composited by hot pressing.

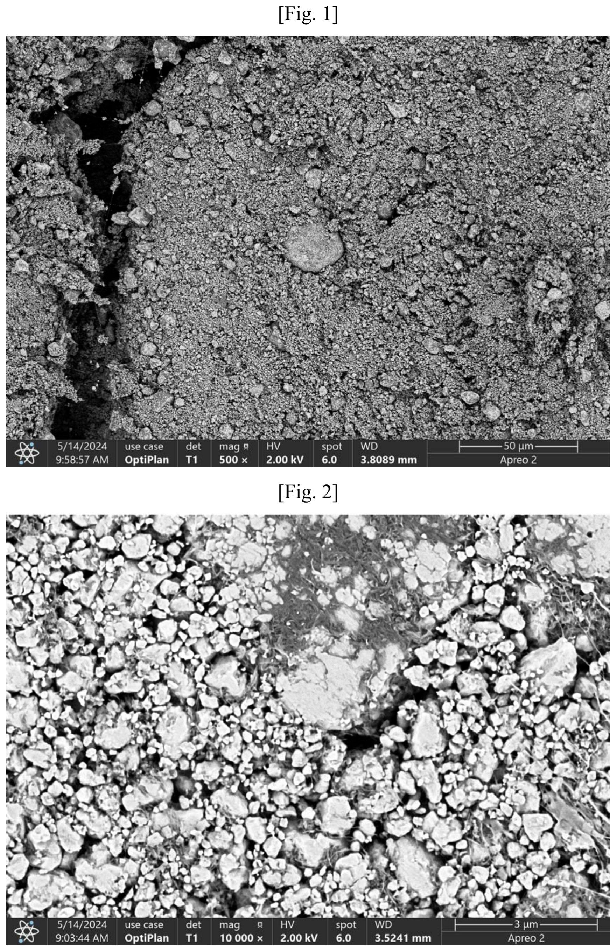

Film preparation: Mixing and shearing the composite sodium iron sulfate positive electrode material provided in Example 1 with PTFE to form a fibrillated powder material (as shown in FIG. 1), and then obtaining the film by hot pressing (as shown in FIG. 2), wherein the mass percentage of the PTFE was 1%; and
the current collector was an aluminum foil with a conductive primer on the surface and a ceramic edge as an edge (with width of 3 mm).

### Example 5

A positive electrode plate, including a current collector and a film bonded to the current collector, wherein the two were composited by hot pressing.

Film preparation: Mixing and shearing the composite sodium iron sulfate positive electrode material provided in Example 2 with PTFE to form a fibrillated powder material, and then obtaining the film by hot pressing, wherein the mass percentage of the PTFE was 0.5%; and
the current collector was an aluminum foil with a conductive primer on the surface and a ceramic edge as an edge (with width of 3 mm).

### Example 6

A positive electrode sheet, including a current collector and a film bonded to the current collector, wherein the two were composited by hot pressing.

Film preparation: Mixing and shearing the composite sodium iron sulfate positive electrode material provided in Example 3 with PTFE to form a fibrillated powder material, and then obtaining the film by hot pressing, wherein the mass percentage of the PTFE was 2%, and
the current collector was an aluminum foil with a conductive primer on the surface and a ceramic edge as an edge (with width of 3 mm).

### Comparative Example 5

A positive electrode plate, which differs from Example 4 in that it was prepared using the positive electrode material provided in Comparative Example 1.

### Comparative Example 6

A positive electrode plate, which differs from Example 4 in that it was prepared using the positive electrode material provided in Comparative Example 2.

### Comparative Example 7

A positive electrode plate, which differs from Example 4 in that it was prepared using the positive electrode material provided in Comparative Example 3.

### Comparative Example 8

A positive electrode plate, which differs from Example 4 in that it was prepared using the positive electrode material provided in Comparative Example 4.

### Comparative Example 9

A positive electrode plate, of which the preparation method is as follows:
Conductive agent powder, sodium iron sulfate, and PTFE were simultaneously added to a tilt mixer, and subjected to high-speed shearing to obtain a fibrillated material, which was then hot-pressed with an aluminum foil to yield the electrode plate.

In the above, the conductive agent powder was the boron-doped composite modified conductive agent powder in Example 1. The amounts and proportions of the conductive agent powder, sodium iron sulfate, and PTFE were the same as those of Example 4.

### Experimental Example 1

Sodium-ion batteries were prepared using the positive electrode plates provided in the examples and comparative examples, wherein the negative electrode plate of the sodium-ion batteries was a plate prepared by hard carbon as the active material.

The separator was a commercial 20 µm PP separator.

The mass ratio of various components in the electrolyte was: EC (ethylene carbonate): PC (propylene carbonate): EMC (ethyl methyl carbonate): NaPF₆: FEC (fluoroethylene carbonate): PS (propylene sulfite) = 10:15:60:11:3:1.

The performance of the prepared sodium-ion batteries was tested, and the results are as follows.

| Testing protocol | Resistance value of positive electrode plate | Cell capacity | Direct current internal resistance | Capacity retention rate at 45 °C |
|---|---|---|---|---|
| Example 4 | 0.82 Ω | 21.54 Ah | 2.95 mΩ | 96.42% |
| Example 5 | 1.15 Ω | 21.16 Ah | 3.21 mΩ | 96.28% |
| Example 6 | 1.43 Ω | 21.10 Ah | 3.35 mΩ | 96.19% |
| Example 5 | 1.24 Ω | 21.18 Ah | 3.12 mΩ | 96.20% |
| Example 6 | 2.19 Ω | 21.06 Ah | 3.89 mΩ | 96.11% |
| Example 7 | 1.57 Q | 21.21 Ah | 3.54 mΩ | 96.21% |
| Example 8 | 1.86 Ω | 21.34 Ah | 3.77 mΩ | 96.15% |
| Example 9 | 4.12 Ω | 20.04 Ah | 6.06 mΩ | 95.98% |

Finally, it should be noted that: the above-mentioned embodiments are merely used for explaining the technical solutions of the present invention, rather than limiting the present invention. Although the present invention has been described in detail with reference to the above-mentioned embodiments, those ordinarily skilled in the art should understand that: modifications may be made to the technical solutions described in the above-mentioned embodiments, or equivalent substitutions for some or all of the technical features may be made. However, such modifications or substitutions do not make the essence of the corresponding technical solutions deviate from the scope of the technical solutions of the embodiments of the present invention.

### INDUSTRIAL APPLICABILITY

The present invention provides a composite sodium iron sulfate positive electrode material, a preparation method thereof, a sodium-ion battery positive electrode plate, and a sodium-ion battery. The preparation method is simple and convenient. The prepared composite sodium iron sulfate positive electrode material exhibits excellent conductivity, the resistance value of the electrode plate prepared by using the composite sodium iron sulfate positive electrode material as raw materials is lower, and the prepared sodium-ion battery has better electrochemical performance. Doping boron during the preparation process of the conductive agent can improve the conductivity of the conductive agent, reducing the amount of conductive agent used. Adding the conductive agent during the preparation process of the positive electrode material can improve the dispersion uniformity of the conductive agent. High-temperature sintering can enable the contact between the conductive agent and the active material to be more reliable, and the dry-process electrode plate prepared using this material has a lower resistance value of electrode plate.

## Claims

1. A preparation method of a composite sodium iron sulfate positive electrode material, **characterized by** comprising following steps:
a. dispersing a conductive agent and boric acid in an aqueous solution, followed by drying treatment and calcination treatment under a protective atmosphere in sequence to prepare a boron-doped conductive agent; and
b. weighing ferrous sulfate and sodium salt according to a molar ratio of iron to sodium in sodium iron(II) sulfate Na₆Fe₄(SO₄)₇, then ball-milling and mixing the ferrous sulfate and the sodium salt with the boron-doped conductive agent prepared in step a, and sintering the ball-milled and mixed material under a protective atmosphere to yield the composite sodium iron sulfate positive electrode material, wherein
a mass percentage of the conductive agent in the boron-doped conductive agent is 97%-99.5%;
a mass percentage of the boron-doped conductive agent in the composite sodium iron sulfate positive electrode material is 1%-4%; and
a temperature of the sintering is 300-400 °C.

2. The preparation method according to claim 1, **characterized in that** the conductive agent comprises a point-type conductive agent, a linear conductive agent, and a surface-type conductive agent, wherein
the point-type conductive agent comprises conductive carbon black;
the linear conductive agent comprises carbon nanotubes;
the surface-type conductive agent comprises graphene; and
a mass ratio of the point-type conductive agent, the linear conductive agent, and the surface-type conductive agent is (0.5-0.8):(0.1-0.25):(0.1-0.25).

3. The preparation method according to claim 1, **characterized in that** a temperature of the calcination is 900-1,200 °C.

4. The preparation method according to claim 1, **characterized in that** the sodium salt comprises sodium carbonate or sodium bicarbonate.

5. The preparation method according to claim 1, **characterized in that** a particle size of the composite sodium iron sulfate positive electrode material is 1 µm-5 µm.

6. A composite sodium iron sulfate positive electrode material, **characterized by** being prepared using the preparation method according to any one of claims 1-5.

7. A sodium-ion battery positive electrode plate, **characterized by** comprising a current collector and a film bonded to a surface of the current collector, wherein
the film is primarily obtained by mixing and hot-pressing the composite sodium iron sulfate positive electrode material of claim 6 and a binder.

8. The sodium-ion battery positive electrode plate according to claim 7, **characterized in that** the binder comprises polytetrafluoroethylene; and
a mass percentage of the binder in the film is 0.5%-2%.

9. The sodium-ion battery positive electrode plate according to claim 7, **characterized in that** the current collector comprises an aluminum foil with a conductive primer on a surface and a ceramic edge as an edge.

10. A sodium-ion battery, **characterized in that** a positive electrode plate of the sodium-ion battery comprises the sodium-ion battery positive electrode plate according to any one of claims 7-9.
